# EUROPEAN PATENT APPLICATION

(11) **EP 4 742 376 A1**
(43) Date of publication of application: **13.05.2026**
(21) Application number: 25185366.9
(22) Date of filing: 26.06.2025
(51) Int. Cl.: H01M 10/658, H01M 50/209, H01M 50/211, H01M 50/242, H01M 50/244, H01M 50/264, H01M 50/289, H01M 50/505, H01M 50/507

(54) **BATTERY MODULE AND METHOD OF MANUFACTURING THE SAME**

(30) Priority: 12.11.2024 KR 20240160520
(71) Applicant: SK On Co., Ltd., Seoul 03161 (KR)
(72) Inventor: KIM, Jin Kwan, Daejeon 34124 (KR)
(74) Representative: Prüfer & Partner mbB Patentanwälte · Rechtsanwälte

(57) **Abstract**

The present disclosure relates to a battery module (10). More specifically, the present disclosure relates to a battery module (10) with a reinforced welding structure of a case (300) accommodating a cell assembly (100). According to an embodiment of the present disclosure, the battery module (10) with an improved welding quality of the case (300) accommodating the cell assembly (100) can be provided. The battery module (10) according to the present disclosure connects and assembles the case (300) and a bus bar assembly (200) using a fixing module (220) with an adjustable length, and hence can manage a welding gap between a pressurizing case (310) and an insertion case forming the case (300).

## Description

### TECHNICAL FIELD

The present disclosure relates to a battery module.

### BACKGROUND

In a process of assembling a battery module, in order to secure the life of a cell assembly forming the battery module and to absorb a tolerance of the cell assembly, a pad that can be arranged between a plurality of cells forming the cell assembly need to be compressed to a certain degree.

The process of assembling the battery module may include arranging a front case and a rear case at the front and rear of the stacked cell assembly, fixing the front case and the rear case with clamps, and fitting an upper case and a lower case in the above state.

In a process of welding and coupling the front and rear cases and the upper and lower cases, if a welding gap between the cases increases, a welding quality may deteriorate and a welding strength may not be sufficient.

### SUMMARY

The present disclosure relates to a battery module with an improved welding quality of a case accommodating a cell assembly.

The present disclosure relates to a battery module which manages a welding gap between a pressurizing case and an insertion case forming a case by connecting and assembling the case and a bus bar assembly using a fixing module with an adjustable length.

A battery module according to an embodiment of the present disclosure may comprise a cell assembly including battery cells, the battery cells being stacked in a front-rear direction; a case accommodating the cell assembly; and one or more bus bar assemblies accommodated in the case and connected to the case. The case may include a pressurizing case which faces the cell assembly in the front-rear direction. Each of the one or more bus bar assemblies may include a bus bar extending in the front-rear direction; and a fixing module which is fastened to the bus bar and the pressurizing case to adjust a distance between the bus bar and the pressurizing case.

The fixing module may include a fixing nut coupled to the bus bar, and a fixing bolt rotatably coupled to the fixing nut.

The fixing nut may form a stepped shape.

The fixing nut may include a fixing nut body, and a fixing nut outer rotation portion extending from the fixing nut body and having a diameter less than the fixing nut body.

The fixing bolt may be coupled to a fixing nut through hole which axially penetrates the fixing nut.

The fixing bolt may include a fixing bolt rotation portion coupled to the fixing nut through hole, and a fixing bolt body axially extending from the fixing bolt rotation portion.

The fixing bolt may have a stepped shape.

The fixing bolt body may have a diameter greater than the fixing bolt rotation portion.

The bus bar may include a bus bar case, and a nut mounting space formed in the bus bar case. The fixing module may be accommodated in the nut mounting space.

The bus bar further may include a bolt through hole formed in the bus bar case, and the bolt through hole may communicate with the nut mounting space.

The fixing module may pass through the bolt through hole.

The pressurizing case may include a first pressurizing case forming a front face of the battery module, and a second pressurizing case forming a rear face of the battery module.

Each of the first pressurizing case and the second pressurizing case may include a pressurizing case plate, and a pressurizing case plate hole formed in the pressurizing case plate. The fixing bolt may pass through the pressurizing case plate hole.

The cell assembly may include a plurality of sub-cell groups each including the battery cells, and a pad arranged between the plurality of sub-cell groups.

The fixing module may be symmetrically arranged on two sides of the bus bar along the front-rear direction.

The bus bar assemblies may include a first bus bar assembly arranged on a side of the cell assembly, and a second bus bar assembly arranged on another side of the cell assembly.

A method of assembling a battery module according to an embodiment of the present disclosure may comprise arranging a cell assembly including battery cells stacked in a front-rear direction; arranging a pressurizing case forming a case accommodating the cell assembly; arranging a bus bar assembly in the case along the front-rear direction; and adjusting a distance between the bus bar assembly and the case using the bus bar assembly. The bus bar assembly may include a bus bar extending in the front-rear direction; and a fixing module which is fastened to the bus bar and the pressurizing case to adjust a distance between the bus bar and the pressurizing case.

The method may further comprise, after arranging the bus bar assembly in the case, arranging an insertion case forming the case accommodating the cell assembly. Adjusting the distance between the bus bar assembly and the case may be terminated when the insertion case and the pressurizing case are in contact with each other.

According to an embodiment of the present disclosure, there can be provided a battery module with an improved welding quality of a case accommodating a cell assembly.

According to an embodiment of the present disclosure, there can be provided a battery module which manages a welding gap between a pressurizing case and an insertion case forming a case by connecting and assembling the case and a bus bar assembly using a fixing module with an adjustable length.

### BRIEF DESCRIPTION OF THE DRAWINGS

The accompanying drawings, which are included to provide a further understanding of the disclosure and are incorporated in and constitute a part of the disclosure, illustrate embodiments of the disclosure and together with the description serve to explain the principle of the disclosure.
FIG. 1 illustrates a battery module according to an embodiment of the present disclosure.
FIG. 2 is an enlarged view of an area A of FIG. 1.
FIG. 3 illustrates a bus bar assembly according to an embodiment of the present disclosure.
FIG. 4 illustrates a cross-sectional view of a fixing nut of FIG. 2 taken along A1-A2.
FIG. 5 illustrates a bus bar assembly of FIG. 3 when viewed from the above.
FIG. 6 illustrates a bus bar assembly of FIG. 3 when viewed from the front.
FIG. 7 illustrates that a cell assembly and a bus bar assembly are arranged between pressurizing cases in a process of assembling a battery module according to the present disclosure.
FIG. 8 illustrates that a cell assembly is fixed between pressurizing cases using a fixing module in a process of assembling a battery module according to the present disclosure.
FIG. 9 illustrates that an insertion case is arranged between pressurizing cases in a process of assembling a battery module according to the present disclosure.
FIG. 10 illustrates that a gap between an insertion case and a pressurizing case is minimized by pressurizing a cell assembly using a fixing module in a process of assembling a battery module according to the present disclosure.

### DETAILED DESCRIPTION OF THE EMBODIMENTS

Reference will now be made in detail to embodiments of the disclosure, examples of which are illustrated in the accompanying drawings. However, the following description is merely an example and does not intend to limit embodiments of the disclosure to a specific implementation.

A battery module according to the present disclosure can be applied to a pouch cell, a cylindrical cell, a prismatic cell, etc. A battery cell 111 forming the battery module may be of a winding type, a stacking type, a zigzag folding type, or a stack-folding type.

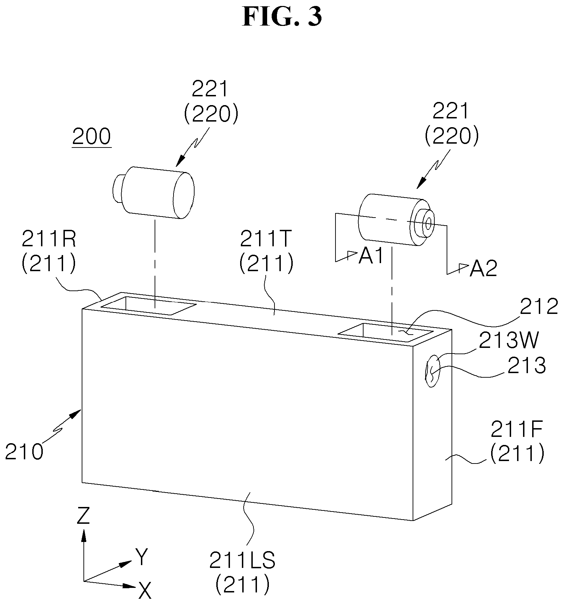

In embodiments of the present disclosure, a coordinate system may be a cartesian coordinate system. In embodiments of the present disclosure, an up-down direction and a front-rear direction may be set with reference to FIG. 3.

The front-rear direction may be parallel to the X-axis. For example, a positive X-direction may indicate the forward. For example, a negative X-direction may indicate the rearward.

The up-down direction may be parallel to the Z-axis. For example, a positive Z-direction may indicate the upward. For example, a negative Z-direction may indicate the downward.

A left-right direction may be parallel to the Y-axis. For example, a positive Y-direction may indicate the right side. For example, a negative Y-direction may indicate the left side. The Y-axis may be perpendicular to each of the X-axis and the Z-axis.

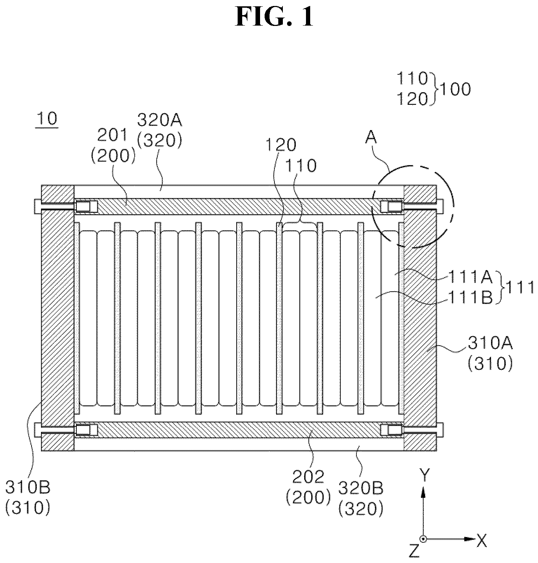

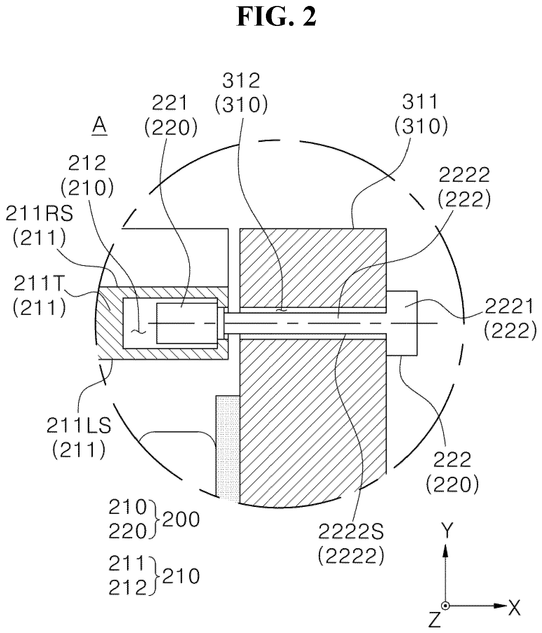

Referring to FIGS. 1 to 3, a battery module 10 may include a cell assembly 100. The cell assembly 100 may be arranged along the front-rear direction.

The battery module 10 may include a bus bar assembly 200. The bus bar assembly 200 may enable electrical connection between a plurality of battery cells 111 forming the cell assembly 100. The bus bar assembly 200 may be arranged on one side or two sides of the cell assembly 100. For example, the bus bar assembly 200 may be spaced apart from a right side or a left side of the cell assembly 100.

The battery module 10 may include a case 300. The case 300 may form a hollow shape. The case 300 may accommodate the cell assembly 100 and the bus bar assembly 200.

A longitudinal direction of the battery module 10 may be parallel to the front-rear direction. A height direction of the battery module 10 may be parallel to the up-down direction. A width direction of the battery module 10 may be parallel to the left-right direction. A stacking direction of the cell assembly 100 may be parallel to the longitudinal direction of the battery module 10.

The cell assembly 100 may include one or more sub-cell groups 110 and one or more pads 120 adjacent to the one or more sub-cell groups 110.

The plurality of sub-cell groups 110 and the plurality of pads 120 may be provided. For example, the plurality of sub-cell groups 110 and the plurality of pads 120 may be arranged sequentially. For example, the plurality of sub-cell groups 110 and the plurality of pads 120 may be arranged in a row along the front-rear direction.

A single pad 120 may be arranged adjacently between a pair of sub-cell groups 110. For example, the plurality of sub-cell groups 110 and the plurality of pads 120 may be arranged alternately.

The pad 120 may be in contact with an inner face of the case 300. For example, the pad 120 arranged at a frontmost end and a rearmost end among the pads 120 forming the plurality of cell assemblies 100 arranged in a row along the front-rear direction may be in contact with the inner face of the case 300.

The sub-cell group 110 may include at least one battery cell 111. The sub-cell group 110 may include or indicate one or more of a first battery cell 111A and a second battery cell 111B.

The plurality of battery cells 111 forming the sub-cell group 110 may be stacked along the front-rear direction. For example, a pair of battery cells 111 including the first battery cell 111A and the second battery cell 111B may be arranged in a row along the front-rear direction.

The pad 120 may be arranged between the sub-cell groups 110. The pad 120 may be arranged on sides of the sub-cell groups 110. For example, the pad 120 may be arranged in contact with the sides of the sub-cell groups 110 along the front-rear direction.

The pad 120 may block the propagation of heat or flame that may occur in the battery cells 111 forming the sub-cell group 110. In a process of installing the plurality of sub-cell groups 110, the overall distance of the plurality of sub-cell groups 110 along the front-rear direction may be adjusted. For example, the pad 120 including a compressible elastic material may adjust a distance between the sub-cell groups 110.

The bus bar assembly 200 may be arranged inside the battery module 10. For example, the bus bar assembly 200 may form a left side or a right side of the battery module 10. The bus bar assembly 200 may be arranged in the case 300. For example, the bus bar assembly 200 may be arranged in the case 300 along the front-rear direction.

The bus bar assembly 200 may connect pressurizing cases 310 forming the case 300. For example, the bus bar assembly 200 may connect the pressurizing cases 310 forming a front face and a rear face of the battery module 10.

The battery module 10 may include a first bus bar assembly 201 and a second bus bar assembly 202. The bus bar assembly 200 may include or indicate one or more of the first bus bar assembly 201 and the second bus bar assembly 202.

The first bus bar assembly 201 may be arranged on the right side of the cell assembly 100. The second bus bar assembly 202 may be arranged on the left side of the cell assembly 100. The first bus bar assembly 201 and the second bus bar assembly 202 may be symmetrical with respect to the cell assembly 100.

The bus bar assembly 200 may include a bus bar 210. The bus bar 210 may be formed along one direction. For example, the bus bar 210 may extend forward from an end and lead to another end. An extension direction of the bus bar 210 may be parallel to the longitudinal direction of the battery module 10.

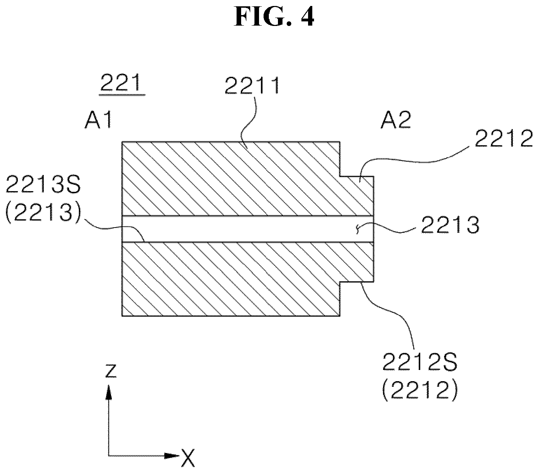

Referring to FIGS. 3 and 4, the bus bar 210 may include a bus bar case 211. The bus bar case 211 may form an overall appearance of the bus bar 210. For example, the bus bar case 211 may form a rectangular hexahedron shape.

The bus bar case 211 may be formed along one direction. For example, the bus bar case 211 may extend forward from an end and lead to another end. An extension direction of the bus bar case 211 may be parallel to the longitudinal direction of the battery module 10.

The bus bar case 211 may include a bus bar case front face 211F. A front face of the bus bar case front face 211F may face or be directed toward the front. The bus bar case front face 211F may form a front face of the bus bar assembly 200.

The bus bar case 211 may include a bus bar case rear face 211R. A rear face of the bus bar case rear face 211R may face or be directed toward the rear. The bus bar case rear face 211R may be spaced apart from the bus bar case front face 211F.

The bus bar case rear face 211R may be arranged behind the bus bar case front face 211F. A distance between the bus bar case front face 211F and the bus bar case rear face 211R may indicate a length of the bus bar 210.

The bus bar case 211 may include a bus bar case top face 211T. A top face of the bus bar case top face 211T may face or be directed toward the upward. The bus bar case top face 211T may connect or couple the bus bar case front face 211F and the bus bar case rear face 211R. For example, the bus bar case top face 211T may lead to a top side of the bus bar case front face 211F and a top side of the bus bar case rear face 211R.

The bus bar case 211 may include a bus bar case bottom face 211B. A bottom face of the bus bar case bottom face 211B may face or be directed toward the downward. The bus bar case bottom face 211B may be spaced apart from the bus bar case top face 211T. The bus bar case bottom face 211B may be arranged below the bus bar case top face 211T.

A distance between the bus bar case bottom face 211B and the bus bar case top face 211T may indicate a height of the bus bar 210. The bus bar case bottom face 211B may connect or couple the bus bar case front face 211F and the bus bar case rear face 211R. For example, the bus bar case bottom face 211B may lead to a bottom side of the bus bar case front face 211F and a bottom side of the bus bar case rear face 211R.

The bus bar case 211 may include a bus bar case right face 211RS. The bus bar case right face 211RS may face or be directed toward the right side.

The bus bar case 211 may include a bus bar case left face 211LS. The bus bar case left face 211LS may face or be directed toward the left side. The bus bar case left face 211LS may be spaced apart from the bus bar case right face 211RS along the left-right direction. A distance between the bus bar case right face 211RS and the bus bar case left face 211LS may form a thickness of the bus bar case 211.

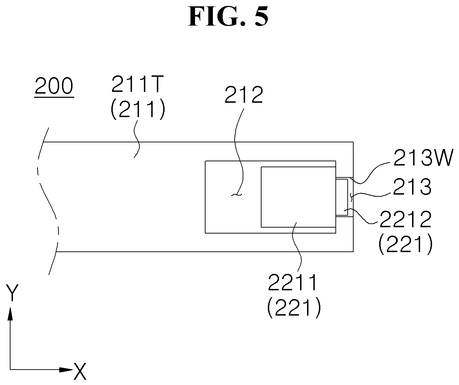

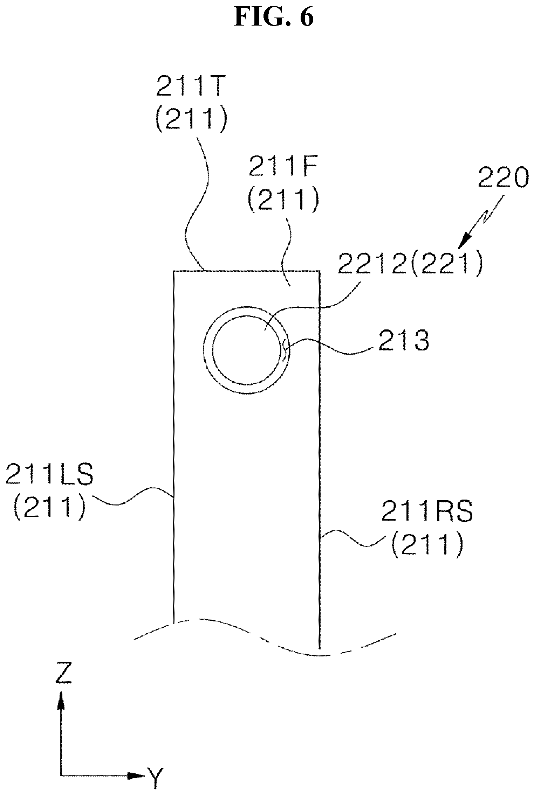

Referring to FIGS. 3, 5 and 6, the bus bar 210 may include a nut mounting space 212. The nut mounting space 212 may be formed in the bus bar case 211. The nut mounting space 212 may be formed as a groove inwardly from the face of the bus bar case 211. For example, the nut mounting space 212 may be formed as a concave groove downward on the bus bar case top face 211T.

The nut mounting space 212 may form a chamber shape that is opened upward. For example, the nut mounting space 212 may be connected to the bus bar case top face 211T. For example, the nut mounting space 212 may face or be directed toward the upward.

The bus bar 210 may include a bolt through hole 213. The bolt through hole 213 may be formed in the bus bar case 211. The bolt through hole 213 may penetrate inwardly from the face of the bus bar case 211.

The bolt through hole 213 may be connected to the bus bar case front face 211F or the bus bar case rear face 211R. For example, the bolt through hole 213 may be opened toward the front or the rear. The bolt through hole 213 may be connected to the nut mounting space 212.

The bolt through hole 213 may be connected stepwise to the nut mounting space 212. The nut mounting space 212 may communicate with the outside of the bus bar case 211 by the bolt through hole 213.

The nut mounting space 212 and the bolt through hole 213 may be formed symmetrically in the bus bar case 211. For example, the nut mounting space 212 may be formed on both sides in a longitudinal direction of the bus bar case top face 211T, and the bolt through hole 213 may be formed in each of the bus bar case front face 211F and the bus bar case rear face 211R.

The bus bar assembly 200 may include a fixed module 220. The fixed module 220 may be connected or coupled to the bus bar 210.

A plurality of fixed modules 220 may be provided. The plurality of fixed modules 220 may be symmetrically arranged on the bus bar case 211. For example, the plurality of fixed modules 220 may be arranged on both sides of the bus bar 210 along a longitudinal direction of the bus bar 210.

The fixed module 220 may include a fixing nut 221. The fixing nut 221 may be accommodated in the bus bar 210. The fixing nut 221 may be accommodated in the nut mounting space 212. For example, the fixing nut 221 may enter the nut mounting space 212 from above the bus bar case 211 and be mounted in the nut mounting space 212.

The fixing nut 221 may extend from an end and lead to another end. For example, the fixing nut 221 may extend from an end along the longitudinal direction of the bus bar 210 and lead to another end.

The fixing nut 221 may include a fixing nut body 2211. The fixing nut body 2211 may extend from an end along the longitudinal direction of the bus bar 210 and lead to another end. For example, the fixing nut body 2211 may form a cylindrical shape.

The fixing nut 221 may include a fixing nut outer rotation portion 2212. The fixing nut outer rotation portion 2212 may extend from the other end of the fixing nut body 2211 along the longitudinal direction of the bus bar 210 and lead to another end. For example, the fixing nut outer rotation portion 2212 may form a cylindrical shape.

The fixing nut outer rotation portion 2212 may form a step with the fixing nut body 2211. For example, the fixing nut outer rotation portion 2212 may form a cylindrical shape having a smaller diameter than the fixing nut body 2211. The fixing nut outer rotation portion 2212 may be positioned in the bolt through hole 213.

The fixing nut outer rotation portion 2212 may include a fixing nut outer spiral portion 2212S. The fixing nut outer spiral portion 2212S may be formed on an outer circumferential face of the fixing nut outer rotation portion 2212.

The fixing nut outer rotation portion 2212 may correspond to a bolt through hole wall 213W formed in the bus bar case 211. The bolt through hole wall 213W may face or be directed toward the bolt through hole 213. For example, the fixing nut outer spiral portion 2212S formed in the fixing nut outer rotation portion 2212 may be correspondingly coupled to a spiral formed in the bolt through hole wall 213W.

The fixing nut 221 may include a fixing nut through hole 2213. The fixing nut through hole 2213 may penetrate the fixing nut 221. The fixing nut through hole 2213 may pass through the center of the fixing nut body 2211 and the fixing nut outer rotation portion 2212. For example, the fixing nut through hole 2213 may form a rotational center axis of the fixing nut 221.

The fixed module 220 may include a fixing bolt 222. The fixing bolt 222 may be coupled to the fixing nut 221. For example, the fixing bolt 222 may be rotatably coupled to the fixing nut 221. For example, the fixing nut 221 and the fixing bolt 222 may have a ball-screw structure.

The fixing bolt 222 may include a fixing bolt body 2221. The fixing bolt body 2221 may extend from an end along the longitudinal direction of the bus bar 210 and lead to another end. The fixing bolt body 2221 may be exposed to the outside of the battery module 10.

The fixing bolt 222 may include a fixing bolt rotation portion 2222. The fixing bolt rotation portion 2222 may extend from an end of the fixing bolt body 2221 along the longitudinal direction of the bus bar 210 and lead to another end. For example, the fixing bolt rotation portion 2222 may form a cylindrical shape.

The fixing bolt rotation portion 2222 may form a step with the fixing bolt body 2221. For example, the fixing bolt rotation portion 2222 may form a cylindrical shape having a smaller diameter than the fixing bolt body 2221.

The fixing bolt rotation portion 2222 may be coupled to the fixing nut 221. For example, the fixing bolt rotation portion 2222 may be rotatably coupled to the fixing nut through hole 2213. For example, a fixing bolt spiral portion 2222S formed on an outer circumferential face of the fixing bolt rotation portion 2222 may be correspondingly coupled to a fixing nut inner spiral portion 2213S formed in the fixing nut through hole 2213.

The fixing bolt 222 may rotate in place. Depending on the rotation of the fixing bolt 222, the fixing nut 221 may move along an axial direction of the fixing bolt 222. For example, a forward rotation of the fixing bolt 222 may enable a forward movement of the fixing nut 221, and a reverse rotation of the fixing bolt 222 may enable a rearward movement of the fixing nut 221.

The case 300 may include the pressurizing cases 310. The pressurizing cases 310 may be arranged at the front and the rear of the cell assembly 100 along the stacking direction of the battery cells 111.

The pressurizing case 310 may include a first pressurizing case 310A. The first pressurizing case 310A may form the front face of the battery module 10. A front face of the first pressurizing case 310A may face or be directed toward the front. The first pressurizing case 310A may be arranged in close contact with a front face of the cell assembly 100.

The pressurizing case 310 may include a second pressurizing case 310B. The second pressurizing case 310B may be spaced apart from the first pressurizing case 310A. The second pressurizing case 310B may form the rear face of the battery module 10. The second pressurizing case 310B may be arranged in close contact with a rear face of the cell assembly 100.

For example, the second pressurizing case 310B may be arranged behind the first pressurizing case 310A. The cell assembly 100 may be stacked between the first pressurizing case 310A and the second pressurizing case 310B.

The pressurizing case 310 may include a pressurizing case plate 311. The pressurizing case plate 311 may be a plate or board shape formed in the YZ plane. For example, the pressurizing case 310 may be formed in a plate shape with a thickness in the X-axis direction.

The pressurizing case 310 may include a pressurizing case plate hole 312. The pressurizing case plate hole 312 may be formed in the pressurizing case plate 311. The pressurizing case plate hole 312 may penetrate the pressurizing case plate 311 in the thickness direction.

The fixing bolt rotation portion 2222 of the fixing bolt 222 may pass through the pressurizing case plate hole 312. The fixing bolt rotation portion 2222 may be coupled to the fixing nut 221 through the bolt through hole 213.

The case 300 may include an insertion case 320. The insertion case 320 may include a first insertion case 320A. The first insertion case 320A may form a right face of the battery module 10. The right face of the first insertion case 320A may face or be directed toward the right side.

The insertion case 320 may include a second insertion case 320B. The second insertion case 320B may be spaced apart from the first insertion case 320A. For example, the second insertion case 320B may be spaced apart to the left from the first insertion case 320A. The first insertion case 320A and the second insertion case 320B may be spaced apart along a transverse direction of the battery module 10.

An assembly process of the battery module according to an embodiment of the present disclosure is described below.

The first pressurizing case 310A and the second pressurizing case 310B may be spaced apart from each other along the longitudinal direction of the battery module 10.

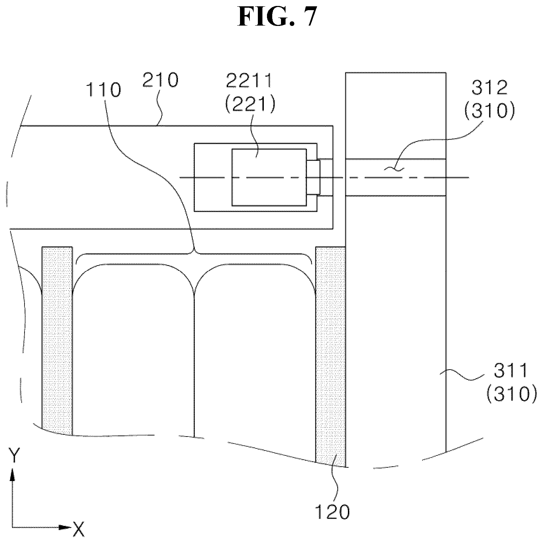

Referring to FIG. 1 and FIGS. 5 to 7, the first pressurizing case 310A and the second pressurizing case 310B may be spaced apart from each other along the front-rear direction, and the battery cells 111 may be arranged to be stacked between the first pressurizing case 310A and the second pressurizing case 310B. The plurality of sub-cell groups 110 and the plurality of pads 120 may be arranged to be stacked along the longitudinal direction of the battery module 10.

The bus bar 210 may be arranged between the first pressurizing case 310A and the second pressurizing case 310B. In addition, the bus bar 210 may be spaced apart from the left and right sides of the cell assembly 100. The front face and the rear face of the bus bar 210 may be spaced apart from the first pressurizing case 310A and the second pressurizing case 310B.

The fixed module 220 may connect the bus bar assembly 200 and the case 300. The fixing nut 221 may be accommodated in the nut mounting space 212 formed in the bus bar 210.

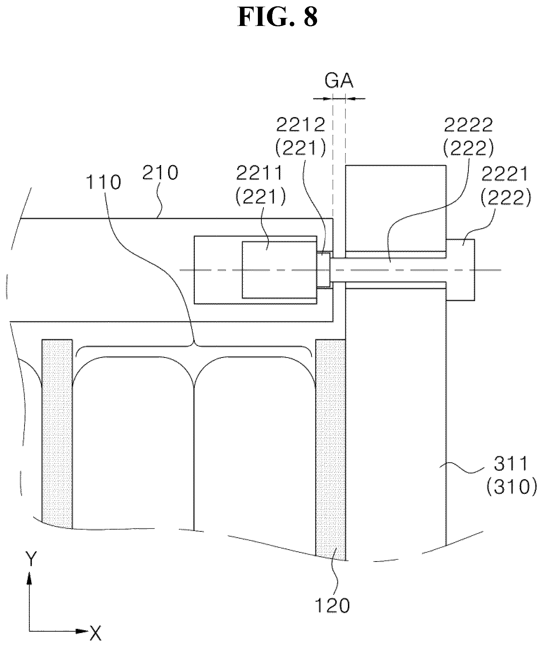

Referring to FIG. 8, the fixing bolt 222 may be coupled to the pressurizing case 310 through the pressurizing case plate hole 312 formed in the pressurizing case plate 311. The fixing bolt 222 may be coupled to the fixing nut 221.

A distance between the bus bar 210 and the pressurizing case 310 may maintain a first distance GA. The first distance GA may indicate a distance between the bus bar 210 and the pressurizing case 310 before the pad 120 forming the cell assembly 100 is pressurized.

The fixing bolt rotation portion 2222 may be spirally coupled to the fixing nut through hole 2213 formed in the fixing nut 221. The fixing bolt body 2221 of the fixing bolt 222 may be rotatably in contact with an outer face of the pressurizing case plate 311.

For example, when the fixing bolt 222 rotates, a bearing structure capable of preventing friction may be formed between the fixing bolt body 2221 and the outer face of the pressurizing case plate 311.

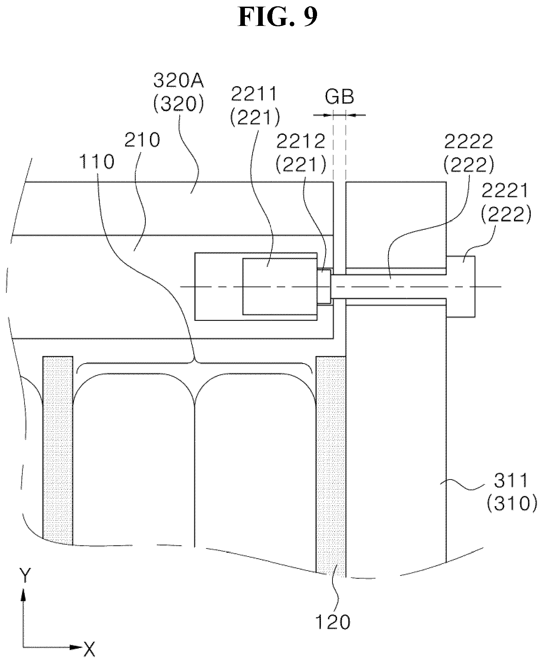

Referring to FIG. 9, the insertion case 320 may be arranged between the first pressurizing case 310A and the second pressurizing case 310B. In addition, the insertion case 320 may be arranged on the left and right sides of the bus bar 210. For example, the first insertion case 320A may be arranged in close contact with a right face of the first bus bar assembly 201, and the second insertion case 320B may be arranged in close contact with a left face of the second bus bar assembly 202.

A distance between the insertion case 320 and the pressurizing case 310 may maintain a second distance GB. The second distance GB may refer to a distance between the insertion case 320 and the pressurizing case 310 before the pad 120 forming the cell assembly 100 is pressurized.

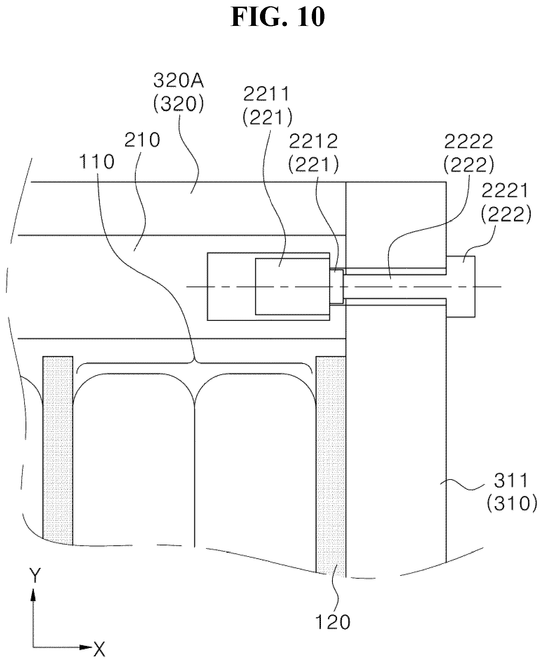

Referring to FIG. 10, the pad 120 forming the cell assembly 100 may be pressurized. Through the rotation of the fixing bolt 222, the fixing bolt rotation portion 2222 may rotate in the fixing nut through hole 2213 of the fixing nut 221.

Through this, the fixing module 220 may perform a ball screw function. The bus bar 210 and the pressurizing case 310 connected through the fixing module 220 may get closer and closer.

When the fixing bolt 222 rotates, the distance between the insertion case 320 and the pressurizing case 310 may gradually decrease. For example, the distance between the insertion case 320 and the pressurizing case 310 may gradually decrease and may be maintained as a distance less the second distance GB.

When the fixing bolt 222 continuously rotates, the insertion case 320 and the pressurizing case 310 may be in close contact with each other. For example, two ends of the insertion case 320 may be in contact with an inner face of the pressurizing case 310. In the above, there may be almost no clearance between the insertion case 320 and the pressurizing case 310.

In the present disclosure, the cell assembly 100 with an adjustable length may be arranged between the pressurizing cases 310 arranged on both sides in the longitudinal direction of the battery module 10, and a distance between the pressurizing cases 310 may be adjusted through the fixing module 220 forming the bus bar assembly 200.

The pad 120 forming the cell assembly 100 may be pressurized by the fixing module 220, and a gap between the insertion case 320 positioned between the pressurizing cases 310 and the pressurizing case 310 may gradually decrease. That is, in the process of assembling the battery module 10, the gap between the pressurizing case 310 and the insertion case 320 forming the case 300 may be minimized.

Welding may be performed between the pressurizing case 310 and the insertion case 320 forming the case 300. During the welding, the gap between the pressurizing case 310 and the insertion case 320 can be minimized, thereby improving the welding quality.

Only specific examples of implementations of certain embodiments are described. Variations, improvements and enhancements of the disclosed embodiments and other embodiments may be made based on the disclosure of this patent document.

## Claims

1. A battery module (10) comprising:
a cell assembly (100) including battery cells (111), the battery cells (111) being stacked in a front-rear direction;
a case (300) accommodating the cell assembly (100); and
one or more bus bar assemblies (200) accommodated in the case (300) and connected to the case (300),
wherein the case (300) includes a pressurizing case (310) which faces the cell assembly (100) in the front-rear direction,
wherein each of the one or more bus bar assemblies (200) includes:
a bus bar (210) extending in the front-rear direction; and
a fixing module (220) which is fastened to the bus bar (210) and the pressurizing case (310) to adjust a distance between the bus bar (210) and the pressurizing case (310).

2. The battery module (10) of claim 1, wherein the fixing module (220) includes:
a fixing nut (221) coupled to the bus bar (210); and
a fixing bolt (222) rotatably coupled to the fixing nut (221),
wherein the fixing nut (221) forms a stepped shape.

3. The battery module (10) of claim 2, wherein the fixing nut (221) includes:
a fixing nut body (2211); and
a fixing nut outer rotation portion (2212) extending from the fixing nut body (2211) and having a diameter less than the fixing nut body (2211).

4. The battery module (10) of claim 2 or 3, wherein the fixing bolt (222) is coupled to a fixing nut through hole (2213) which axially penetrates the fixing nut (221).

5. The battery module (10) of claim 4, wherein the fixing bolt (222) includes:
a fixing bolt rotation portion (2222) coupled to the fixing nut through hole (2213); and
a fixing bolt body (2221) axially extending from the fixing bolt rotation portion (2222),
wherein the fixing bolt (222) has a stepped shape.

6. The battery module (10) of claim 5, wherein the fixing bolt body (2221) has a diameter greater than the fixing bolt rotation portion (2222).

7. The battery module (10) of any one of claims 1 to 6, wherein the bus bar (210) includes:
a bus bar case (211): and
a nut mounting space (212) formed in the bus bar case (211),
wherein the fixing module (220) is accommodated in the nut mounting space (212).

8. The battery module (10) of claim 7, wherein the bus bar (210) further includes a bolt through hole (213) formed in the bus bar case (211),
wherein the bolt through hole (213) communicates with the nut mounting space (212), and
wherein the fixing module (220) passes through the bolt through hole (213).

9. The battery module (10) of any one of claims 1 to 6, wherein the pressurizing case (310) includes:
a first pressurizing case (310A) forming a front face of the battery module (10); and
a second pressurizing case (310B) forming a rear face of the battery module (10).

10. The battery module (10) of claim 9, wherein each of the first pressurizing case (310A) and the second pressurizing case (310B) includes:
a pressurizing case plate (311); and
a pressurizing case plate hole (312) formed in the pressurizing case plate (311),
wherein the fixing bolt (222) passes through the pressurizing case plate hole (312).

11. The battery module (10) of any one of claims 1 to 6, wherein the cell assembly (100) includes:
a plurality of sub-cell groups (110) each including the battery cells (111); and
a pad (120) arranged between the plurality of sub-cell groups (110).

12. The battery module (10) of any one of claims 1 to 6, wherein the fixing module (220) is symmetrically arranged on two sides of the bus bar (210) along the front-rear direction.

13. The battery module (10) of any one of claims 1 to 6, wherein the bus bar assemblies (200) include:
a first bus bar assembly (201) arranged on a side of the cell assembly (100); and
a second bus bar assembly (202) arranged on another side of the cell assembly (100).

14. A method of assembling a battery module (10) comprising:
arranging a cell assembly (100) including battery cells (111) stacked in a front-rear direction;
arranging a pressurizing case (310) forming a case (300) accommodating the cell assembly (100);
arranging a bus bar assembly (200) in the case (300) along the front-rear direction; and
adjusting a distance between the bus bar assembly (200) and the case (300) using the bus bar assembly (200),
wherein the bus bar assembly (200) includes a bus bar (210) extending in the front-rear direction; and a fixing module (220) which is fastened to the bus bar (210) and the pressurizing case (310) to adjust a distance between the bus bar (210) and the pressurizing case (310).

15. The method of claim 14, further comprising, after arranging the bus bar assembly (200) in the case (300), arranging an insertion case forming the case (300) accommodating the cell assembly (100),
wherein adjusting the distance between the bus bar assembly (200) and the case (300) is terminated when the insertion case and the pressurizing case (310) are in contact with each other.
